# EUROPEAN PATENT SPECIFICATION

(11) **EP 4 124 444 B1**
(45) Date of publication and mention of the grant of the patent: **25.02.2026**
(21) Application number: 22186776.5
(22) Date of filing: 25.07.2022
(51) Int. Cl.: B29C 70/02, B32B 5/00, B82Y 30/00, C08J 5/00, B29C 70/88, B29K 105/16

(54) **LAMINATE STRUCTURE**
LAMINIERTE STRUKTUR
STRUCTURE STRATIFIÉE

(30) Priority: 29.07.2021 GB 202110938
(43) Date of publication of application: 01.02.2023
(73) Proprietor: Airbus Operations Limited, Bristol BS34 7PA (GB); Haydale Limited, Carmarthenshire, SA18 3BL (GB)
(72) Inventor: LAGE, Paulo Jorge Teixeira, Bristol, BS34 7PA (GB); WEATHERBY, Nicholas Leo, Loughborough, LE11 1QJ (GB)
(74) Representative: Ribeiro, James Michael

(56) References cited:
- US-B2- 10 213 984
- US-B2- 9 908 298

## Description

### FIELD OF THE INVENTION

The present invention relates to a laminate structure and a method of manufacturing a laminate structure. Typically, but not exclusively, the laminate structure is a part of an aircraft and is designed to protect the aircraft from lightning strike damage.

### BACKGROUND OF THE INVENTION

Aircraft lightning strikes are frequent occurrences and can generate high forces and temperatures, which may cause structural damage and systems disruption.

Embedding metals in the carbon fibre reinforced polymer (CFRP) structure is a known protection method: the metal foil disperses the localised high energy of the lightning, reducing the structural damage and avoiding secondary effects that might compromise aircraft safety.

Work done since 2011-13 and published, among others, by Reference 1 (Yang et al)) and Reference 2 (Tang et al), suggests that combining different carbon allotropes will enhance the in-plane and through-thickness electrical conductivity of CFRP laminates. A synergistic effect, resulting from mixing different carbon allotropes, is explained by Reference 3 (Karch et al, 2016). According to Reference 3, some studies have reported that simultaneous use of a mixture of CNTs and graphene platelets shows a synergistic effect between graphene platelets and MWCNTs. However, Reference 3 states that the effective electrical conductivity is still not sufficient for an application as a standalone lightning protection measure.

In Reference 4 (Karch et al, 2019) a conventional (non nano-doped) CFRP laminate was protected by combining ECF (expanded copper foil) with CNT non-woven mats.

US2017/291386 discloses a structural component, in particular for an aircraft, spacecraft or rocket, with a ply of fiber reinforced polymer; a first carbon nanotube mat; and a metallic layer. The carbon nanotube mat and the metallic layer are arranged on the ply of fiber reinforced polymer to form a hybrid lightning strike protection layer. The non-woven carbon nanotube mats can be manufactured e. g. by way of a gas-phase catalytic reaction creating a dense cloud of very long carbon nanotubes. These can be collected, for example spun around a drum, to create a non-woven mat. Such non-woven carbon nanotube mats are manufactured e.g. by Tortech Nano-Fibers Ltd., Israel or Nanocomp Technologies Inc., USA.

US2016/0031569 discloses a lightning protection layer with a first stratum and a second stratum. The second stratum is coupled to the first stratum along a connecting surface. The first stratum has a metal foil and the second stratum has carbon allotropes.

US10213984B2 discloses a fibre-reinforced laminate with improved lightning strike protection.

Reference 5 (Logakis et al) investigated the influence of multi-wall carbon nanotubes (MWNTs) on the lightning strike performance of carbon fibre. A high temperature aerospace grade epoxy resin was modified with MWNTs. Panels of carbon fibre/epoxy, carbon fibre/epoxy with a protective copper mesh layer, carbon fibre with MWNT modified epoxy, and carbon fibre with copper protection and MWNT modified epoxy were produced.

### SUMMARY OF THE INVENTION

A first aspect of the invention provides a laminate structure comprising: a fibre laminate impregnated with a laminate matrix material; and a veil of carbon nanotubes impregnated with a veil matrix material; wherein the laminate matrix material and the veil matrix material are doped with carbon particles. The invention is defined by claims 1 and 13.

Optionally the veil of carbon nanotubes is not bonded to a metallic lightning strike protection layer.

Optionally the laminate structure does not comprise a metallic lightning strike protection layer.

Optionally the veil of carbon nanotubes is bonded to the fibre laminate.

Optionally the veil of carbon nanotubes is bonded to the fibre laminate by a co-cured joint.

Optionally the veil of carbon nanotubes is embedded within the fibre laminate. The veil of carbon nanotubes may be embedded within an outer composite ply of the fibre laminate, or embedded between composite plies of the fibre laminate.

The veil of carbon nanotubes may be embedded under a surface layer of matrix material, wherein the surface layer of matrix material is doped with the carbon particles.

Optionally the veil of carbon nanotubes is bonded to the fibre laminate by the veil matrix material and/or by a bonding layer which is doped with carbon particles.

Optionally a concentration of the carbon particles decreases away from the veil in a thickness direction of the fibre laminate.

Optionally the laminate matrix material is doped with carbon particles at a lower average concentration than the veil matrix material which impregnates the veil of carbon nanotubes.

Optionally the fibre laminate comprises an outer composite ply which is bonded to the veil of carbon nanotubes and doped with carbon particles.

Optionally the outer composite ply is doped with carbon particles at a first average concentration; and the veil matrix material is doped with carbon particles at a second average concentration which is different to the first concentration.

Optionally the fibre laminate comprises a first sub-stack of composite plies which is bonded to the veil of carbon nanotubes; and a second sub-stack of composite plies; wherein the laminate matrix material which impregnates the second sub-stack of composite plies is not doped with carbon particles, or is doped with carbon particles at a lower average concentration than the laminate matrix material which impregnates the first sub-stack of composite plies. In both of these cases, the concentration of the carbon particles decreases away from the veil in a thickness direction of the fibre laminate, and the laminate matrix material which impregnates the second sub-stack is doped with carbon particles at a lower average concentration than the veil matrix material which impregnates the first sub-stack of composite plies (and optionally with zero concentration).

Optionally the first sub-stack of composite plies is co-cured to the second sub-stack of composite plies.

Optionally the first sub-stack of composite plies has a smaller thickness than the second sub-stack of composite plies.

Optionally the first sub-stack of composite plies has a smaller number of composite plies than the second sub-stack of composite plies.

Optionally the laminate structure has an external surface and an internal surface; and the veil of carbon nanotubes is closer to the external surface than the internal surface.

Optionally the carbon particles comprise or consist of graphene particles and/or carbon nanotubes.

Optionally the carbon particles are carbon nanoparticles.

Optionally the veil of carbon nanotubes comprises a non-woven network of carbon nanotubes.

Optionally the fibre laminate is a carbon fibre laminate.

A further aspect of the invention provides an aircraft comprising a laminate structure according to the first aspect.

Optionally the aircraft comprises a first laminate structure according to the first aspect positioned in a first zone of the aircraft; and a second laminate structure positioned according to the first aspect positioned in a second zone of the aircraft; wherein the laminate matrix material of the first laminate structure is doped with carbon particles at a higher average concentration than the laminate matrix material of the second laminate structure.

Optionally the first laminate structure is impregnated by the doped laminate matrix material through a full thickness of the fibre laminate.

A further aspect of the invention provides a method of manufacturing a laminate structure, the method comprising; providing a fibre laminate impregnated with a laminate matrix material; and providing a veil of carbon nanotubes impregnated with a veil matrix material, wherein the laminate matrix material and the veil matrix material are doped with carbon particles, the method further comprising: co-curing the laminate matrix material and the veil matrix material to bond the veil of carbon nanotubes to the fibre laminate.

Optionally the fibre laminate is provided by laying up a stack of prepreg plies, each prepreg ply comprising one or more fibre layers pre-impregnated with the laminate matrix material.

Optionally the veil of carbon nanotubes is laid up as a dry veil with the stack of prepreg plies, and the veil matrix material impregnates the veil of carbon nanotubes by flowing into the dry veil from the stack of prepreg plies.

Optionally the veil of carbon nanotubes is laid up with the stack of prepreg plies as a prepreg veil pre-impregnated with the veil matrix material.

Optionally the veil matrix material is not doped with the carbon particles when the prepreg veil is laid up, and the veil matrix material becomes doped by the carbon particles flowing into the prepreg veil from the stack of prepreg plies.

Optionally the fibre laminate is provided by laying up a first sub-stack of prepreg plies, each prepreg ply of the first sub-stack comprising one or more fibre layers pre-impregnated with laminate matrix material; and laying up a second sub-stack of prepreg plies, each prepreg ply of the second sub-stack comprising one or more fibre layers pre-impregnated with laminate matrix material, wherein the laminate matrix material impregnating the second sub-stack is not doped with carbon particles.

Optionally the laminate matrix material and the veil matrix material are provided by co-infusing the fibre laminate and the veil of carbon nanotubes.

### BRIEF DESCRIPTION OF THE DRAWINGS

Embodiments of the invention will now be described with reference to the accompanying drawings, in which:
Figure 1 shows an aircraft;
Figure 2 shows a fully doped wing skin panel in cross-section;
Figure 3A shows a partially doped fuselage skin panel in cross-section;
Figure 3B shows a fuselage skin panel in cross-section with a varying nanoparticle concentration gradient;
Figure 4 shows the dry veil and un-cured prepreg components in cross-section in the first step of a method of manufacturing the panel of Figure 2 or the panel of Figure 3A;
Figure 5 shows the cured laminate components in cross-section resulting from the prepreg method of Figure 4, where the veil becomes fully embedded in the structural plies;
Figure 6 shows the cured laminate components in cross-section resulting from the prepreg method of Figure 4, where the veil becomes only partially embedded in the structural plies;
Figure 7 shows un-cured prepreg components in cross-section in the first step of another method of manufacturing the panel of Figure 2 or the panel of Figure 3A; and
Figure 8 shows the cured laminate components in cross-section resulting from the prepreg method of Figure 7, where the veil becomes co-cured to the fibre laminate but not embedded.

### DETAILED DESCRIPTION OF EMBODIMENT(S)

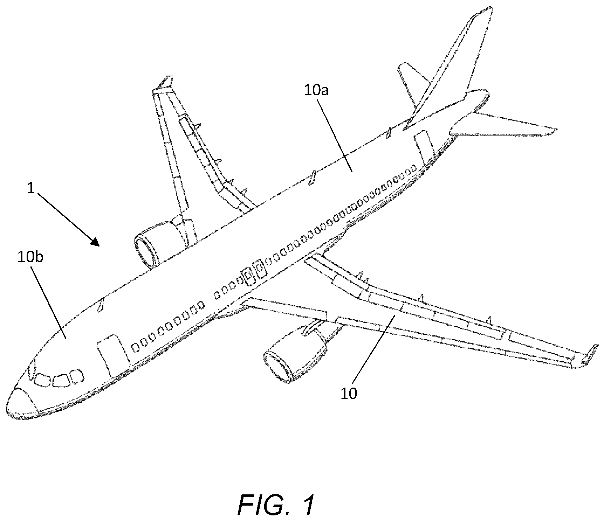

An aircraft 1 shown in Figure 1 has various lightning strike zones, defined as zones 1-3 in SAE Aerospace Recommended Practices (ARP) 5414. Some zones are more prone to lightning strike than others. Areas in zone 1 are most prone, areas in zone 3 are least prone. By way of example, the wings, the tips of the horizontal tail plane and the nose are mostly in zone 1, whereas most of the fuselage is in zone 2.

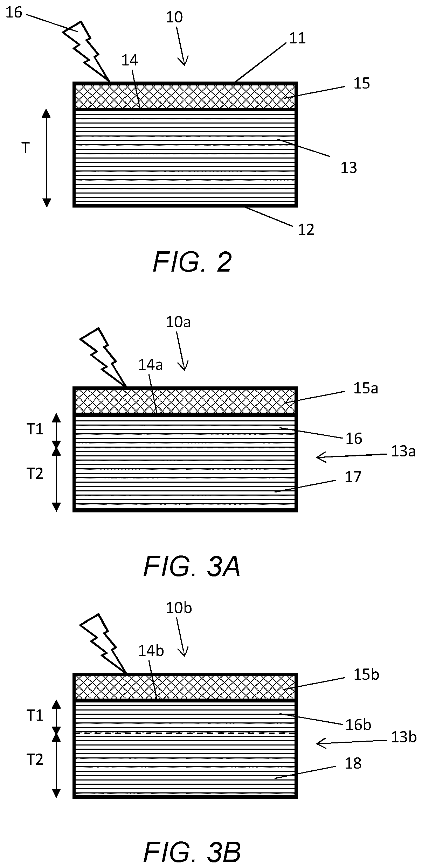

Figure 2 is a cross-section view of a laminate structure of the aircraft in zone 1, in this case a panel 10 of the skin of one of the wings.

The panel 10 has an external surface 11 and an internal surface 12, the external surface 11 being positioned such that it is exposed to lightning strike 16.

The panel 10 is a laminate structure comprising a fibre laminate 13 and a veil 15 of carbon nanotubes. The fibre laminate 13 is a stack of composite plies, each composite ply in the stack comprising a fibre layer impregnated with a laminate matrix material. Optionally each fibre layer in the stack is a carbon fibre layer, although other fibre materials are possible. Optionally the laminate matrix material comprises epoxy resin, although other matrix materials are possible.

The laminate matrix material which impregnates the fibre laminate 13 is doped with carbon particles. All of the composite plies are doped, so the laminate matrix material is doped through a full thickness T of the fibre laminate 13.

The carbon particles are formed from an allotrope of carbon. The particles may be 90 wt.% carbon, at least 92 wt.% carbon, or at least 95 wt.% carbon, as determined by elemental analysis.

### Preferably, the carbon particles are carbon nanoparticles.

The carbon nanoparticles may have at least one dimension less than 500nm, or more typically at least one dimension less than 100nm. Most typically the carbon nanoparticles have at least one dimension between 1nm and 500nm, or between 1nm and 100nm. The dimensions may be determined by microscopy, for example by scanning electron microscopy.

For the avoidance of doubt, the skilled reader understands that the carbon particles are present in addition to any carbon fibres of the fibre laminate and in addition to the carbon nanotubes of the carbon nanotube veil.

The term "doping" as used herein is used to refer to incorporation of the particles into the matrix material, for example through mixing. In instances where the particles are carbon nanoparticles, the doping may be referred to as "nano-doping".

The carbon particles may be, for example, graphene particles, carbon nanotubes, or mixtures of these components.

Suitably, the carbon particles are dispersed relative to one another within the laminate matrix material and/or within the veil matrix material. This should be contrasted with the carbon nanotube veil, in which the carbon nanotubes of the veil are associated/aggregated instead of being dispersed. Preferably, there is no or minimal levels of agglomeration and aggregation of the carbon particles, either with other carbon particles or with other components of the laminate structure. Advantageously, ensuring that the carbon particles are dispersed relative to one another helps to reduce the concentration required to form a conductive network from the carbon particles. Doping the carbon particles into the matrix material can allow a conductive network of particles to be formed in three dimensions, which helps to dissipate lightning strike. In addition, doping carbon particles into the matrix material provides a relatively simple route of manufacture.

Optionally, the carbon particles may be surface-functionalised carbon particles. For example, the surface-functionalised carbon particles may incorporate functional groups at their surface to aid dispersion in the matrix material. Alternatively, or additionally, the carbon particles may incorporate functional groups which reduce or avoid formation of agglomerates of the carbon particles. For example, the carbon particles may be hydroxy-functionalised, carboxy-functionalised, carbonyl-functionalised, amine-functionalised, amide-functionalised or halogen-functionalised. These types of surface functionalisation of the carbon particles may be achieved, for example, according to the methods taught in WO2010/142953 and WO2012/076853.

Preferably, the carbon particles are graphene particles. The high electrical conductivity of graphene particles (which is higher than, for example carbon black and graphite) means that when graphene particles are used a relatively low loading of particles can be used to establish a conductive network.

Suitably, the graphene particles have a high aspect ratio. Advantageously, graphene particles having a high aspect ratio can form conductive paths at relatively low loading levels.

The graphene particles may take the form of particles of monolayer graphene (i.e. a single layer of carbon) or multilayer graphene (i.e. particles consisting of multiple stacked graphene layers). Multilayer graphene particles may have, for example, an average (mean) of 2 to 100 graphene layers per particle. When the graphene particles have 2 to 5 graphene layers per particle, they can be referred to as "few-layer graphene" particles (FLGs). The number of layers may be determined by scanning electron microscopy.

The graphene particles may take the form of plates/flakes/sheets/ribbons of multilayer graphene material, referred to herein as "graphene nanoplatelets" (the "nano" prefix indicating thinness, instead of the lateral dimensions).

The graphene particles may take the form of platelets having a thickness less than 100 nm and a major dimension (length or width) perpendicular to the thickness. The platelet thickness is preferably less than 70 nm, preferably less than 50 nm, preferably less than 30 nm, preferably less than 20 nm, preferably less than 10 nm, preferably less than 5 nm (this is based on >90% of the particles having these properties, measured using light scattering by a Zetasizer Ultra). The major dimension is preferably at least 10 times, more preferably at least 100 times, more preferably at least 1,000 times, more preferably at least 10,000 times the thickness. The length may be at least 1 times, at least 2 times, at least 3 times, at least 5 times or at least 10 times the width.

The graphene particles are preferably at least 90 wt.% carbon based on the bulk (determined by elemental analysis), more preferably at least 92 wt.% carbon, most preferably at least 95 wt.% carbon.

In a preferred embodiment, the carbon particles may be GNPs (Graphene nanoplatelets) or FLG (few layered graphene), optionally combined with MWCNTs (Multi walled carbon nanotubes).

The loading of carbon particles in the laminate structure may be, for example, 0.1 wt% or more, 0.2 wt.% or more, 0.25 wt.% or more, 0.4 wt.% or more, 0.5 wt.% or more, 1 wt.% or more, 2 wt.% or more, 5 wt.% or more, 10 wt.% or more. The upper limit for the loading of carbon particles in the laminate structure may be, for example 1 wt.%, 2 wt.%, 5 wt.%, 10 wt.%. Preferably, the loading of the carbon particles is in the range of, for example, 0.25 to 10 wt.%, 0.5 to 10 wt.%, or 0.5 to 5 wt.%.

The loading of carbon particles in the laminate structure may be, for example, 0.1 vol.% or more, 0.2 vol.% or more, 0.25 vol.% or more, 0.4 vol.% or more, 0.5 vol.% or more, 1 vol.% or more, 2 vol.% or more, 5 vol.% or more, 10 vol.% or more. The upper limit for the loading of carbon particles in the laminate structure may be, for example, 1 vol.%, 2 vol.%, 5 vol.%, 10 vol.%. Preferably, the loading of the carbon particles is in the range of, for example, 0.25 to 10 vol.%, 0.5 to 10 vol.%, or 0.5 to 5 vol.%. The volume% can be determined by taking a cross-sectional slice through the laminate structure, and examining by size exclusion microscopy.

Optionally, there is a gradient of carbon particle loading across the thickness of the laminate structure. Preferably, the gradient decreases from the external surface of the laminate structure to the internal surface of the laminate structure. For example, at least 50% of the carbon particles may be present in the top 50% of the thickness of the laminate structure, in the top 40% of the thickness of the laminate structure, in the top 30% thickness of the laminate structure, in the top 20% thickness of the laminate structure (the "top" of the structure being the external surface). Optionally, 100% of the carbon particles may be present in the top 50% of the thickness of the laminate structure, in the top 40% of the thickness of the laminate structure, in the top 30% thickness of the laminate structure, or in the top 20% thickness of the laminate structure. The concentration of carbon particles may be determined by examining a cross-sectional slice of the laminate structure under a scanning electron microscope.

The stack of composite plies comprises an outer ply 14 which, along with the other plies in the fibre laminate 13, is doped with the carbon particles.

The veil 15 of carbon nanotubes is bonded to the outer ply 14 of the fibre laminate. The veil 15 is configured to provide lightning strike protection to the panel 10. The veil 15 may be a non-woven network of intermingled carbon nanotubes with substantially random orientation.

The carbon nanotubes of the veil 15 may be multi-walled nanotubes (MWNTs), single-walled nanotubes (SWNTs) or a mixture thereof.

At least some of the carbon nanotubes of the veil 15 may have an aspect ratio greater than 1000:1, greater than 5,000:1, or greater than 10,000:1.

Typically a thickness of the veil 15 is less than 100 microns (100*10⁻⁶m) or less than 50 microns (50*10⁻⁶m). Most preferably a thickness of the veil 15 is less than 30 microns (30*10⁻⁶m). Alternatively the thickness of the veil 15 may be more than 100 microns (100*10⁻⁶m).

The veil 15 is closer to the external surface 11 than the internal surface 12. Figure 2 shows the veil 15 as forming the external surface, but alternatively the veil may be embedded within the outer ply 14 so that the outer ply 14 and the embedded veil 15 together form the external surface 11 of the panel 10. Note that the outer ply 14 and the embedded veil 15 may be covered with one or more surface layers, such as paint.

The veil 15 of carbon nanotubes is impregnated with a veil matrix material which is also doped with carbon particles. The carbon particles are as described above.

Optionally the veil matrix material comprises an epoxy resin, although other resin materials are possible. In this case the veil matrix material is the same type of material (for instance the same type of epoxy resin) as the laminate matrix material impregnating the fibre laminate 13.

Figure 3A is a cross-sectional view of a laminate structure of the aircraft in zone 2, in this case a panel 10a of the skin on the fuselage.

Certain elements of the panel 10a have equivalents in the panel 10. These elements are given the same reference number, appended by the letter "a". Where the elements are identical, they will not be described again.

The panel 10a is a laminate structure comprising a fibre laminate 13a and a carbon nanotube veil 15a. The fibre laminate 13a comprises a first sub-stack 16 of composite plies and a second sub-stack 17 of composite plies. The first sub-stack 16 is co-cured to the second sub-stack 17 and to the veil 15a of carbon nanotubes

The laminate matrix material which impregnates the first sub-stack 16 is doped with carbon particles, whereas the laminate matrix material which impregnates the second sub-stack 17 is not doped with carbon particles.

Thus only some of the composite plies of the panel 10a are doped, so that the fibre laminate 13a is only doped through a partial thickness T1.

The laminate matrix material of all of the composite plies in the first sub-stack 16 (including the outer ply 14a) is doped with the carbon particles.

The laminate matrix material may be doped with graphene particles, with carbon nanotubes, or with a mixture of graphene particles and carbon nanotubes.

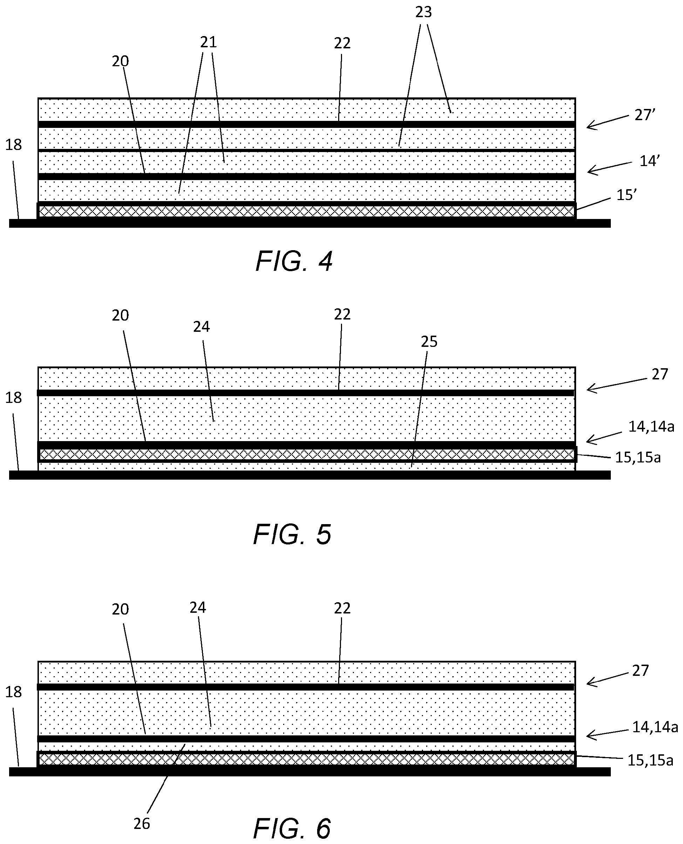

Advantageously, the panel 10a may be manufactured in prepreg, as described in more detail below with reference to Figures 4-8 which will be described later.

Another panel 10b which may be located in zone 2 of the aircraft is shown in Figure 3B. Certain elements of the panel 10b have equivalents in the panel 10a. These elements are given the same reference number, appended by the letter "b". Where the elements are identical, they will not be described again.

The only difference between the panel 10a and the panel 10b is that the laminate matrix material which impregnates the second sub-stack 18 in the panel 10b is doped with the same carbon particles as the first sub-stack 16b, but at a lower average concentration than the laminate matrix material which impregnates the first sub-stack 16b.

In one example the second sub-stack 18 may have a relatively low and uniform concentration of carbon particles.

In another example, a concentration of the carbon particles may decrease continuously in the second sub-stack 18 away from the veil 15b in a thickness direction of the fibre laminate. Thus the carbon particle concentration is relatively high in the veil 15b and in the first sub-stack 16b, but decreases continuously through the second sub-stack 18 - potentially to zero concentration at the bottom of the second sub-stack 18. This concentration gradient may be achieved by manufacturing the panel 10b by resin co-infusion, as described in more detail below.

The panels 10a, 10b can be manufactured more cheaply than the highly doped panel 10, because fewer carbon particles are required (note that carbon particles such as graphene can be expensive).

The first sub-stack 16, 16b is the outer part of the stack, positioned between the veil 15a, 15b and the second sub-stack 17, 18.

The first sub-stack 16, 16b may have a smaller stack thickness T1 than the stack thickness T2 of the second sub-stack 17, 18.

The first sub-stack 16, 16b may have a smaller number of composite plies than the second sub-stack 17, 18.

By way of non-limiting example, the thickness T1 may be of the order of 2mm (about 10 to 20 plies) and the thickness T2 may be of the order of 20mm (about 100 to 200 plies). Alternatively the thickness T1 may be much lower - potentially as little as a single ply.

The fibre laminate 13 of the panel 10 may be impregnated by the doped laminate matrix material through a thickness T which is greater than the thickness T1 of the first sub-stack 16, 16b. This gives the panel 10 enhanced lightning strike protection, compared with the panels 10a, 10b.

The panel 10 may be positioned in zone 1 of the aircraft (as defined in in SAE Aerospace Recommended Practices (ARP) 5414) and the panels 10a, 10b may be positioned in zone 2 (as defined in SAE Aerospace Recommended Practices (ARP) 5414). The fibre laminate of the panel 10 is impregnated by the doped laminate matrix material through its full thickness T, whereas the fibre laminate of the panel 10a, 10b may be impregnated by the doped laminate matrix material through only part of its thickness.

In both Figure 3A and Figure 3B, the concentration of the carbon particles decreases away from the veil in a thickness direction of the fibre laminate. In the case of Figure 3A the concentration decreases in a step down to zero where the first sub-stack 16 meets the second sub-stack 17. In the case of Figure 3B the concentration decreases continuously through the thickness of the second sub-stack 17.

In both Figure 3A and Figure 3B, the laminate matrix material which impregnates the second sub-stack 17, 18 is doped with carbon particles at a lower average concentration than the veil matrix material which impregnates the first sub-stack 16, 16b. In the case of Figure 3A, the second sub-stack 17 has a concentration of zero.

The laminate matrix material of the first laminate structure (panel 10) of Figure 2 is doped with carbon particles at a higher average concentration than the laminate matrix material of the second laminate structure (panel 10a or 10b) of Figure 3A or 3B.

Various prepreg methods of manufacturing the panels 10, 10a are shown in Figures 4-8.

Referring first to Figure 4, a dry veil 15' of carbon nanotubes is placed on a mould tool surface 18 of a mould tool. The dry veil 15' may be obtained by various fabrication methods. One method involves injecting a precursor, followed by nucleation of the CNTs in a reactor, at very high temperature. A "sock" of uniform diameter (0.5-1 metre) emerges and is wound on a drum. The "sock" walls are made from long intermingled CNTs, with random orientation, but biased towards the extraction direction.

The CNTs, originating in the reactor, are streamed in a turbulent flow. Turbulent flow is random in nature, and when the CNTs are streamed in such flow they become intermingled, similar to vermicelli or boiled spaghetti.

Reference 6 (Wang et al) outlines a variation of this manufacturing process.

Another method of manufacturing the dry veil 15' is to grow a "forest" of CNTs on a substrate, then treat the "forest" so the CNTs tilt in random directions to form a flattened layer. By way of example, the CNTs may be flattened by a calendaring process that randomly flattens the CNT "forest" on a 2D substrate. The CNTs are not perfectly vertical and parallel to with each other, and they "fall" in the direction they are leaning.

The fibre laminate 13, 13a is then laid up on top of the dry veil 15' as a stack of prepreg plies, each prepreg ply comprising one or more fibre layers pre-impregnated with either doped laminate matrix material or un-doped laminate matrix material (i.e., matrix material which is not doped with carbon particles). In the case of panel 10, all of the prepreg plies are doped; in the case of the panel 10a only the lower prepreg plies (i.e. the plies of the first sub-stack 16) are doped and the others are un-doped.

Figure 4 shows an outer prepreg ply 14', and the next prepreg ply 27' in the stack. Each prepreg ply comprises one or more layers of unidirectional carbon fibre pre-impregnated with laminate matrix material. For example the outer prepreg ply 14' comprises a layer of unidirectional carbon fibre 20 pre-impregnated with doped laminate matrix material 21; and the next prepreg ply 27' comprises a layer of unidirectional carbon fibre 22 pre-impregnated with doped laminate matrix material 23. The prepreg plies 14', 27' are laid up in contact with each other as shown. The outer prepreg ply 14' is in contact with the dry veil 15'.

The directions of the unidirectional carbon fibres may vary from ply to ply in the stack of prepreg plies, and each ply may also have more than one orientation.

The stack of prepreg plies is then compressed/consolidated by a vacuum bag and then cured in an autoclave at a pressure of several bars. The prepreg plies are heat cured in contact with the dry veil 15', so that the dry veil 15' becomes infused and bonded to the stack of composite plies, to form the cured and impregnated veil 15 or 15a. More specifically, the thermosetting doped laminate matrix material is heated, softens, melts and partially flows into the dry veil 15' of carbon nanotubes from the stack of prepreg plies 14', 27', coalesces at the interfaces between the prepreg plies, and then co-cures to bond the prepreg plies together and to bond the impregnated veil 15 to the outer ply 14 of the stack as shown in Figure 5.

Figure 5 shows the parts in their impregnated and cured state corresponding with Figures 2 and 3A: namely the veil 15, 15a the outer composite ply 14, 14a and the next composite ply 27 in the stack. Figures 4 shows the parts in their dry or uncured state - namely the dry veil 15', the uncured outer prepreg ply 14' and the uncured prepreg ply 27'.

In the cured structure of Figure 5, the carbon fibre layers 20, 22 are bonded together by a co-cured joint comprising a cured layer 24 of doped laminate matrix material. During the curing process, the dry fibre veil 15' may become fully embedded in the outer ply 14. In this case, the veil 15, 15a in the cured structure of Figure 5 is bonded to the fibre laminate 13, 13a by the cured veil matrix material which impregnates the veil 15, 15a and the cured laminate matrix material which impregnates the carbon fibre layer 20.

The veil 15, 15a is also embedded in the fibre laminate under a surface layer 25 of cured doped matrix material between the veil 15, 15a and the surface 18 of the mould tool.

Thus the veil 15, 15a is bonded to the outer ply 14 of the fibre laminate by a co-cured joint between the veil 15, 15a and the carbon fibre layer 20, and a co-cured joint between the veil and the surface layer 25.

In the fully embedded case of Figure 5, some carbon nanotubes of the veil 15, 15a, in the cured structure are in contact with the layer of unidirectional carbon fibre 20 and some carbon nanotubes of the veil 15, 15a are in contact with the carbon particles which are mixed within the doped veil matrix material.

The veil 15, 15a of carbon nanotubes is embedded under a surface layer 25 of matrix material, and the surface layer 25 of matrix material is doped with carbon particles. Thus some carbon nanotubes of the veil 15 are in contact with the carbon particles which are mixed within the surface layer 25.

Note that the layers in Figure 4 and 5 are illustrated schematically, and not to scale. The veil 15, 15a is typically much thinner than each prepreg ply 14', 27'. By way of example, each prepreg ply 14', 17' may have a thickness of the order of 0.1-0.5mm (100-500 micron) after it has cured, and the veil 15, 15a may have a thickness less than 30 micron after it has cured.

In an alternative shown in Figure 6, during the curing process the dry veil 15' becomes only partially embedded in the outer ply 14, so that the veil 15, 15a in the cured structure is not in contact with the layer 20 of unidirectional carbon fibre. The veil 15, 15a in the case of Figure 6 is bonded to the fibre laminate by a co-cured joint comprising a cured bonding layer 26 of doped laminate matrix material.

In a further alternative (not shown) the partially embedded dry veil 15' of Figure 6 may be embedded under a surface layer of doped matrix material like the surface layer 25 of Figure 5, whilst remaining separated from the layer 20 by the cured bonding layer 26.

The veil matrix material which impregnates the veil 15, 15a in the cured structure of Figure 5 or Figure 6 flows into the dry veil 15' from the stack of prepreg plies 14', 27'. Thus the veil matrix material is doped with carbon particles at a similar concentration to the laminate matrix material which impregnates the fibre laminate 13, 13a.

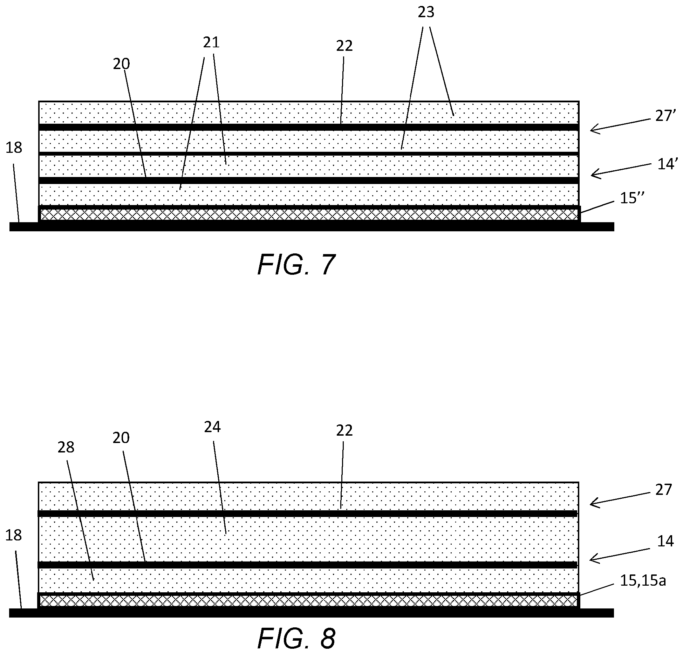

In an alternative prepreg manufacturing method shown in Figure 7, the veil is laid up on the tool 18 as a prepreg veil 15" which is pre-impregnated with the veil matrix material. The veil matrix material in the prepreg veil 15" may be doped with the same carbon particles as the prepregs of the fibre laminate 13, 13a, or it may be un-doped - i.e. not doped with carbon particles.

The use of a prepreg veil 15" may be preferred, because it is easier to handle than a dry veil 15'.

During the co-curing process, the prepreg veil 15" may become fully embedded in the outer ply 14 (so the veil 15, 15a in the cured structure contacts the layer of unidirectional carbon fibre 20 as in Figure 5); it may become partially embedded in the outer ply 14 (so the veil 15, 15a in the cured structure does not contact the layer 20 of unidirectional carbon fibre but is embedded under a surface layer of matrix material); or it may not become embedded at all (as shown in Figure 8).

If the veil matrix material in the prepreg veil 15" is un-doped, then the cured veil matrix material which impregnates the veil 15, 15a in the cured structure will contain some carbon particles which originated in the doped matrix material 21 of the outer prepreg ply 14' and flowed or diffused into the veil 15, 15a.

If the veil matrix material in the prepreg veil 15" is un-doped, and the veil becomes fully embedded as in Figure 5, or partially embedded, then the matrix material of the surface layer 25 may be un-doped, or it may contain carbon particles which originated in the doped matrix material 21 of the outer prepreg ply 14a and flowed or diffused through the prepreg veil 15" and into the surface layer 25.

In the cured structure of Figure 8, during the co-curing process the prepreg veil 15" does not become embedded in the outer ply 14, so the veil 15, 15a in the cured structure is not in contact with the layer of unidirectional carbon fibre 20 and is not embedded under a surface layer. The veil 15 in this case is bonded to the outer ply 14 of the fibre laminate by a co-cured joint comprising a cured bonding layer 28 of doped laminate matrix material.

If the veil matrix material in the prepreg veil 15" is un-doped, then the matrix material of the cured bonding layer 28 will contain carbon particles which originated in the doped matrix material 21 of the outer prepreg ply 14'.

The cured veil matrix material which impregnates the veil in Figure 8 will also contain some carbon particles which flowed or diffused into the veil from the doped matrix material 21 of the outer prepreg ply 14'.

The prepreg methods of Figures 4-8 are well suited to manufacturing the panel 10a of Figure 3A. In this case the fibre laminate 13a is provided by laying up a first sub-stack of prepreg plies, each prepreg ply of the first sub-stack comprising one or more fibre layers pre-impregnated with doped laminate matrix material; and laying up a second sub-stack of prepreg plies, each prepreg ply of the second sub-stack comprising one or more fibre layers pre-impregnated with un-doped laminate matrix material. The un-doped laminate matrix material which impregnates the prepreg plies of the second sub-stack is not doped with carbon particles.

In some of the prepreg methods described above, the veil matrix material is un-doped when the prepreg veil 15" is laid up, and the veil matrix material becomes doped by carbon particles flowing into the prepreg veil 15" from the stack of prepreg plies. In this case, a concentration of the carbon particles may be lower, on average, in the cured veil matrix material than in the cured laminate matrix material. Surprisingly, despite this lower average concentration, it has been found that starting from a prepreg veil 15" with an un-doped veil matrix material results in a better lightning strike performance compared with starting from a dry veil 15'. Without being bound by theory, it is speculated that this improved performance may be due to carbon particles diffusing to the outer surface of the veil 15, 15a, optionally into a surface layer such as the surface layer 25. The doped laminate matrix material will have a slightly higher density than the un-doped veil matrix material in the prepreg veil 15". This enables an easy migration of the carbon particles from the outer prepreg ply 14' to the outer surface of the prepreg veil 15". This may result in a surface layer in the cured laminate structure with a higher concentration of carbon particles than within the body of the veil 15, 15a. This surface layer may provide an improved "Faraday cage", resulting in the observed better lightning strike performance. For instance, in the case of Figure 5 the laminate structure may comprise a surface layer 25 of matrix material with a higher concentration of carbon particles than the veil matrix material within the veil 15, 15a.

A preferred method of manufacturing the panel 10b of Figure 3B is co-infusion. In the co-infusion method, the fibre laminate 13b is laid up as a stack of porous dry fibre preforms, along with a dry veil of carbon nanotubes, similar to the dry veil 15'. The dry fibre preforms and the dry veil are then co-infused with liquid doped matrix material, which is then cured to co-cure the various parts together.

The doped matrix material flows into the first sub-stack 16b through the dry veil, then flows into the second sub-stack 18 from the first sub-stack. The veil provides a filtering effect, which causes the carbon particles to accumulate inside the veil and in the first sub-stack 16b, with relatively few carbon particles reaching the second sub-stack 18. This creates a concentration gradient in the cured structure, the concentration of carbon particles decreasing away from the veil 15b in the thickness direction of the laminate structure.

In all of the methods described above, the fibre laminate comprises an outer composite ply 14, 14a, 14b which is bonded to the veil 15, 15a, 15b of carbon nanotubes and doped with carbon particles. The outer composite ply 14, 14a, 14b is doped with carbon particles at a first average concentration; and the veil matrix material is doped with carbon particles at a second average concentration. In some cases, the first average concentration and the second average concentration may be the same - for instance in the prepreg processes which start with a dry veil 15' or a doped prepreg veil 15". In other cases, the first average concentration and the second average concentration may be different to each other. For instance starting from of an un-doped prepreg veil 15" may result in a lower second average concentration in the veil, and the co-infusion method may result in a higher second average concentration in the veil.

The mixing of the different carbon particles into the matrix material may follow well known processes involving either two or three roll milling and/or insonification using a sonotrode to convey ultra-sonic energy into an epoxy resin masterbatch. This doped masterbatch is then thoroughly diluted with the main resin, either in a pre-preg line (to produce the prepregs 14', 27', 15") or in an infusion mixing-dosing apparatus (in the case of the co-infusion process described above).

There is a good correlation between effective lightning strike protection and the measured, in plane, electrical conductivity of a carbon-fibre reinforced polymer (CFRP) laminate. Up until recently, these measurements where done using contact probes that required careful coupon preparation (silver/gold coating the probe contact areas). This was an unreliable method for CFRP and thus a contactless, more accurate method (the "Gobin" method) was developed and is now used. The Gobin method relies on electromagnetic field attenuation, measured when a CFRP panel is placed between two probes that is then correlated to the electrical conductivity of a known value from a reference coupon.

Another textbook attempt to determine protection effectiveness of CFRP structures by predicting its electrical conductivity, is by calculating its dielectric relaxation time; it is related to the electrical conductivity and in essence it measures the time it takes a charged system to return to equilibrium; the issue is that the mathematical model is only accurate for semi-conductors, not metals.

From the earlier contact based electrical conductivity measurements it was established that medium weight expanded copper foil (ECF) has a value of 4x10^7 S/m; CFRP along the fibre, 1x10^4 S/m; CNT & graphene estimated at <1x10^8 S/m.

Theoretical calculation applying the rule of mixtures on the volume fraction content of a CFRP laminate with 60% of carbon fibres and 1% of nano-fillers+CNT veil: 0.6(10^4/0.6) + 0.4(10^8/0.01) ~ 4x10^9 S/m

This value falls short of the expected conductivity values as experimentally measured by contact methods but is in line with contactless measurements recently obtained.

The lightning strike phenomenon is yet to be fully understood due to its transient nature, where pressure and heat occur in fractions of seconds, and thus offers significant challenges for an accurate mathematical model.

It has been established that there are two main lightning strike damage effects: thermal effects and mechanical force effects. The latter are transient by nature, while the former are of a relatively long duration.

Thermal effects involve not only conductive heat from the arc plasma channel, but also Joule heating (current flow through the conductive materials) and plasma channel heat radiation. This results in temperature-induced material degradation and mechanical strains due to expansion/contraction.

The mechanical force effects include magnetic field pressure (current flow through the conductive materials), shock waves due to supersonic expansion of the plasma channel and also from chemical sublimation.

Surprisingly, it has been established by test that most of the damage to CFRP structures appears to result from the mechanical force effects, not thermal effects.

Where expanded copper foil (ECF) is used, as in Reference 4, transient explosive forces develop severe impact loads by the vaporized particles of copper protection foil, resin and carbon fibre. The highly dense copper particles are believed to be responsible for the bulk of the damage.

The laminate structures 10, 10a, 10b described above have no metallic lightning strike protection layer, such as an ECF layer. It is believed that the removal of the high density (~9) ECF layer, substituted by a lower density, highly conductive veil 15, 15a, 15b of carbon nanotubes (with a density of 1.4) will significantly reduce the mechanical force damage.

Further, it is believed that the randomly oriented intermingled carbon nanotubes in the veil may be more efficient at absorbing energy than an ECF lattice-like layer.

Further, it is believed that there may be a synergistic effect in combining a doped fibre laminate with a doped carbon nanotube veil. The carbon nanotube veil provides the advantages mentioned above: it reduces mechanical force effects due to its low density and intermingled structure. Impregnating the veil with a veil matrix material which is doped with carbon particles may further improve the lightning strike performance, because the carbon nanotubes of the veil interact with the carbon particles in the veil matrix material in order to improve the conductive network (increase the amount of conductive paths) available to dissipate electrical energy.

In the examples above, the veil 15, 15a, 15b of carbon nanotubes is bonded to the fibre laminate 13, 13a, 13b by the veil matrix material and/or by a bonding layer 26, 28 which is doped with carbon particles. This is preferred, although in an alternative embodiment the veil 15, 15a, 15b of carbon nanotubes may be bonded to the fibre laminate 13, 13a, 13b by an un-doped bonding layer.

In the examples above, the veil 15, 15a, 15b of carbon nanotubes is bonded to the surface layer 14, 14a, 14b of the fibre laminate, and optionally also embedded within the surface layer 14, 14a, 14b of the fibre laminate. In other embodiments, the veil 15, 15a, 15b of carbon nanotubes may be embedded in the fibre laminate between the surface layer 14, 14a, 14b and the next composite ply 27. In all of these cases, the veil 15 of carbon nanotubes is bonded to the fibre laminate 13, 13a, 13b by a co-cured joint. A co-cured joint typically has substantially no interface in the cured structure.

In other embodiments the veil 15, 15a, 15b of carbon nanotubes may be bonded to the fibre laminate 13, 13a, 13b by some other bonding process, such as co-bonding or secondary bonding. In this case, the veil 15, 15a, 15b of carbon nanotubes in the cured structure will be bonded to the fibre laminate 13, 13a, 13b by another type of adhesive joint, such as a co-bonded joint or a secondary-bonded joint.

In the examples above the wing skin panel 10 is highly doped through its full thickness, whereas the fuselage panels 10a, 10b are not. Other variations are possible. For instance, some parts of the aircraft (for instance the stringers which run along the span of each wing on the inside of the wing skin) are more prone to edge glow than others. Thus the stringers may be doped through their full thickness with carbon particles (like the panel 10) whereas other parts less prone to edge glow (for instance the wing skin) may only be highly doped through part of their thickness (like the panel 10a or the panel 10b).

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

### References

Reference 1: Yang, Shin-Yi & Lin, Wei-Ning & Huang, Yuan-Li & Tien, Hsi-Wen & Wang, Jeng-Yu & Ma, Chen-Chi & Li, Shin-Ming & Wang, Yu-Sheng. (2011). Synergetic effects of graphene platelets and carbon nanotubes on the mechanical and thermal properties of epoxy composites. Carbon. 49. 793-803. 10.1016/j.carbon.2010.10.014.
Reference 2: Tang, Yong & Gou, Jihua. (2010). Synergistic effect on electrical conductivity of few-layer graphene/multi-walled carbon nanotube paper. Materials Letters. 64. 2513-2516. 10.1016/j.matlet.2010.08.035.
Reference 3: Karch, Christian & Metzner, Christian. (2016). Lightning Protection of Carbon Fibre Reinforced Plastics - An Overview -. 10.1109/ICLP.2016.7791441.
Reference 4: Karch, Christian & Alper, Matan & Yeshurun, Yehoshua & Wolfrum, Johannes. (2019). HYBRID LIGHTNING PROTECTION OF CFRP STRUCTURES WITH CNT NON-WOVEN MATS.
Reference 5: Logakis, Emmanuel & Skordos, Alex. (2012). Lightning strike performance of carbon nanotube loaded aerospace composites. ECCM 2012 - Composites at Venice, Proceedings of the 15th European Conference on Composite Materials.
Reference 6: Fabrication of Ultralong and Electrically Uniform Single-Walled Carbon Nanotubes on Clean Substrates; Xueshen Wang, Qunqing Li, Jing Xie, Zhong Jin, Jinyong Wang, Yan Li, Kaili Jiang, and Shoushan Fan; Nano Letters 2009 9 (9), 3137-3141; DOI: 10.1021/nl901260b.

## Claims

1. A laminate structure (10,10a,10b) comprising:
a fibre laminate (13,13a,13b) impregnated with a laminate matrix material; and
a veil (15,15a,15b) of carbon nanotubes impregnated with a veil matrix material;
wherein the laminate matrix material and the veil matrix material are doped with carbon particles.

2. A laminate structure according to claim 1 wherein the veil (15,15a,15b) of carbon nanotubes is not bonded to a metallic lightning strike protection layer or the laminate structure ((10,10a,10b) does not comprise a metallic lightning strike protection layer.

3. A laminate structure according to claim 1 or 2 wherein the veil (15,15a,15b) of carbon nanotubes is embedded within an outer composite ply (14,14a) of the fibre laminate.

4. A laminate structure according to claim 3 wherein the veil (15,15a,15b) of carbon nanotubes is embedded under a surface layer (25) of matrix material, and the surface layer of matrix material is doped with carbon particles.

5. A laminate structure according to any preceding claim wherein the veil (15,15a,15b) of carbon nanotubes is bonded to the fibre laminate by the veil matrix material and/or by a bonding layer which is doped with carbon particles.

6. A laminate structure according to any preceding claim wherein a concentration of the carbon particles decreases away from the veil (15,15a,15b) in a thickness direction of the fibre laminate (13,13a,13b).

7. A laminate structure according to any preceding claim wherein the laminate matrix material is doped with carbon particles at a lower average concentration than the veil matrix material which impregnates the veil of carbon nanotubes.

8. A laminate structure according to any preceding claim wherein the fibre laminate (13,13a,13b) comprises an outer composite ply (14,14a) which is bonded to the veil of carbon nanotubes and doped with carbon particles.

9. A laminate structure according to any preceding claim wherein the fibre laminate comprises a first sub-stack (16) of composite plies which is bonded to the veil of carbon nanotubes; and a second sub-stack (17,18) of composite plies; wherein the laminate matrix material which impregnates the second sub-stack (17) of composite plies is not doped with carbon particles, or the second sub-stack (18) of composite plies is doped with carbon particles at a lower average concentration than the laminate matrix material which impregnates the first sub-stack of composite plies.

10. A laminate structure according to any preceding claim wherein the carbon particles are carbon nanoparticles.

11. An aircraft (1) comprising a laminate structure (10,10a,10b) according to any preceding claim.

12. An aircraft (1) according to claim 11, comprising a first laminate structure (10) according to any preceding claim positioned in a first zone of the aircraft; and a second laminate structure (10a,10b) according to any preceding claim positioned in a second zone of the aircraft; wherein the laminate matrix material of the first laminate structure is doped with carbon particles at a higher average concentration than the laminate matrix material of the second laminate structure.

13. A method of manufacturing a laminate structure (10,10a,10b), the method comprising;
providing a fibre laminate (13,13a,13b) impregnated with a laminate matrix material; and
providing a veil (15,15a,15b) of carbon nanotubes impregnated with a veil matrix material,
wherein the laminate matrix material and the veil matrix material are doped with carbon particles, the method further comprising:
co-curing the laminate matrix material and the veil matrix material to bond the veil of carbon nanotubes to the fibre laminate (13,13a,13b).

14. A method according to claim 13 wherein the fibre laminate (13,13a,13b) is provided by laying up a stack of prepreg plies (14',27'), each prepreg ply comprising one or more fibre layers pre-impregnated with the laminate matrix material.

15. A method according to claim 13 or 14 wherein the fibre laminate is provided by laying up a first sub-stack (16b) of prepreg plies, each prepreg ply of the first sub-stack comprising one or more fibre layers pre-impregnated with the laminate matrix material; and laying up a second sub-stack (17) of prepreg plies, each prepreg ply of the second sub-stack comprising one or more fibre layers pre-impregnated with laminate matrix material, wherein the laminate matrix material impregnating the second sub-stack is not doped with carbon particles.

## Patentansprüche

1. Laminatstruktur (10,10a,10b) umfassend:
ein Faserlaminat (13,13a,13b), imprägniert mit einem Laminatmatrixmaterial; und
einen Schleier (15,15a,15b) aus Kohlenstoffnanoröhren, imprägniert mit einem Schleiermatrixmaterial;
wobei das Laminatmatrixmaterial und das Schleiermatrixmaterial mit Kohlenstoffpartikeln dotiert sind.

2. Laminatstruktur nach Anspruch 1, wobei der Schleier (15,15a,15b) aus Kohlenstoffnanoröhren nicht an eine metallische Blitzschutzschicht gebunden ist oder die Laminatstruktur (10,10a,10b) keine metallische Blitzschutzschicht umfasst.

3. Laminatstruktur nach Anspruch 1 oder 2, wobei der Schleier (15,15a,15b) aus Kohlenstoffnanoröhren in einer äußeren Verbundlage (14,14a) des Faserlaminats eingebettet ist.

4. Laminatstruktur nach Anspruch 3, wobei der Schleier (15,15a,15b) aus Kohlenstoffnanoröhren unter einer Oberflächenschicht (25) aus Matrixmaterial eingebettet ist und die Oberflächenschicht von Matrixmaterial mit Kohlenstoffpartikeln dotiert ist.

5. Laminatstruktur nach einem der vorstehenden Ansprüche, wobei der Schleier (15,15a,15b) aus Kohlenstoffnanoröhren durch das Schleiermatrixmaterial und/oder durch eine Bindeschicht, die mit Kohlenstoffpartikeln dotiert ist, an das Faserlaminat gebunden ist.

6. Laminatstruktur nach einem der vorstehenden Ansprüche, wobei eine Konzentration der Kohlenstoffpartikel in einer Dickenrichtung des Faserlaminats (13,13a,13b) von dem Schleier (15,15a,15b) weg abnimmt.

7. Laminatstruktur nach einem der vorstehenden Ansprüche, wobei das Laminatmatrixmaterial mit Kohlenstoffpartikeln in einer niedrigeren mittleren Konzentration dotiert ist als das Schleiermatrixmaterial, das den Schleier aus Kohlenstoffnanoröhren imprägniert.

8. Laminatstruktur nach einem der vorstehenden Ansprüche, wobei das Faserlaminat (13,13a,13b) eine äußere Verbundlage (14,14a) umfasst, die an den Schleier aus Kohlenstoffnanoröhren gebunden und mit Kohlenstoffpartikeln dotiert ist.

9. Laminatstruktur nach einem der vorstehenden Ansprüche, wobei das Faserlaminat einen ersten Teilstapel (16) von Verbundlagen, der an den Schleier aus Kohlenstoffnanoröhren gebunden ist, und einen zweiten Teilstapel (17,18) von Verbundlagen umfasst; wobei das Laminatmatrixmaterial, das den zweiten Teilstapel (17) von Verbundlagen imprägniert, nicht mit Kohlenstoffpartikeln dotiert ist oder der zweite Teilstapel (18) von Verbundlagen mit Kohlenstoffpartikeln in einer niedrigeren mittleren Konzentration dotiert ist als das Laminatmatrixmaterial, das den ersten Teilstapel von Verbundlagen imprägniert.

10. Laminatstruktur nach einem der vorstehenden Ansprüche, wobei die Kohlenstoffpartikel Kohlenstoffnanopartikel sind.

11. Luftfahrzeug (1), umfassend eine Laminatstruktur (10,10a,10b) nach einem der vorstehenden Ansprüche.

12. Luftfahrzeug (1) nach Anspruch 11, umfassend eine erste Laminatstruktur (10) nach einem der vorstehenden Ansprüche, die in einer ersten Zone des Luftfahrzeugs positioniert ist; und eine zweite Laminatstruktur (10a, 10b) nach einem der vorstehenden Ansprüche, die in einer zweiten Zone des Luftfahrzeugs positioniert ist; wobei das Laminatmatrixmaterial der ersten Laminatstruktur mit Kohlenstoffpartikeln in einer höheren mittleren Konzentration dotiert ist als das Laminatmatrixmaterial der zweiten Laminatstruktur.

13. Verfahren zur Herstellung einer Laminatstruktur (10,10a,10b), wobei das Verfahren umfasst:
Bereitstellen eines Faserlaminats (13,13a,13b), imprägniert mit einem Laminatmatrixmaterial; und
Bereitstellen eines Schleiers (15,15a,15b) aus Kohlenstoffnanoröhren, imprägniert mit einem Schleiermatrixmaterial,
wobei das Laminatmatrixmaterial und das Schleiermatrixmaterial mit Kohlenstoffpartikeln dotiert sind, wobei das Verfahren ferner umfasst:
Co-Härten des Laminatmatrixmaterials und des Schleiermatrixmaterials, um den Schleier aus Kohlenstoffnanoröhren an das Faserlaminat (13,13a,13b) zu binden.

14. Verfahren nach Anspruch 13, wobei das Faserlaminat (13,13a,13b) durch Auflegen eines Stapels von Prepreg-Lagen (14',27') bereitgestellt wird, wobei jede Prepreg-Lage eine oder mehrere mit dem Laminatmatrixmaterial vorimprägnierte Faserschichten umfasst.

15. Verfahren nach Anspruch 13 oder 14, wobei das Faserlaminat durch Auflegen eines ersten Teilstapels (16b) von Prepreg-Lagen bereitgestellt wird, wobei jede Prepreg-Lage des ersten Teilstapels eine oder mehrere Faserschichten umfasst, die mit dem Laminatmatrixmaterial vorimprägniert sind; und Auflegen eines zweiten Teilstapels (17) von Prepreg-Lagen, wobei jede Prepreg-Lage des zweiten Teilstapels eine oder mehrere Faserschichten umfasst, die mit Laminatmatrixmaterial vorimprägniert sind, wobei das Laminatmatrixmaterial, das den zweiten Teilstapel imprägniert, nicht mit Kohlenstoffpartikeln dotiert ist.

## Revendications

1. Structure stratifiée (10, 10a, 10b) comprenant :
un stratifié fibreux (13, 13a, 13b) imprégné d'un matériau matriciel de stratifié ; et
un voile (15, 15a, 15b) de nanotubes de carbone imprégné d'un matériau matriciel de voile ;
dans laquelle le matériau matriciel de stratifié et le matériau matriciel de voile sont dopés avec des particules de carbone.

2. Structure stratifiée selon la revendication 1, le voile (15, 15a, 15b) de nanotubes de carbone n'étant pas lié à une couche métallique de protection contre le foudroiement, ou bien la structure stratifiée (10, 10a, 10b) ne comprenant pas de couche métallique de protection contre le foudroiement.

3. Structure stratifiée selon la revendication 1 ou 2 dans laquelle le voile (15, 15a, 15b) de nanotubes de carbone est incorporé dans une nappe composite externe (14, 14a) du stratifié fibreux.

4. Structure stratifiée selon la revendication 3 dans laquelle le voile (15, 15a, 15b) de nanotubes de carbone est incorporé sous une couche superficielle (25) de matériau matriciel, et la couche superficielle de matériau matriciel est dopée avec des particules de carbone.

5. Structure stratifiée selon une quelconque revendication précédente dans laquelle le voile (15, 15a, 15b) de nanotubes de carbone est lié au stratifié fibreux par le matériau matriciel de voile et/ou par une couche de liaison qui est dopée avec des particules de carbone.

6. Structure stratifiée selon une quelconque revendication précédente dans laquelle la concentration des particules de carbone diminue en s'éloignant du voile (15, 15a, 15b) dans la direction de l'épaisseur du stratifié fibreux (13, 13a, 13b).

7. Structure stratifiée selon une quelconque revendication précédente dans laquelle le matériau matriciel de stratifié est dopé avec des particules de carbone à une concentration moyenne inférieure à celle du matériau matriciel de voile qui imprègne le voile de nanotubes de carbone.

8. Structure stratifiée selon une quelconque revendication précédente dans laquelle le stratifié fibreux (13, 13a, 13b) comprend une nappe composite externe (14, 14a) qui est liée au voile de nanotubes de carbone et dopée avec des particules de carbone.

9. Structure stratifiée selon une quelconque revendication précédente dans laquelle le stratifié fibreux comprend un premier sous-empilement (16) de nappes composites qui est lié au voile de nanotubes de carbone ; et un deuxième sous-empilement (17, 18) de nappes composites ; dans laquelle le matériau matriciel de stratifié qui imprègne le deuxième sous-empilement (17) de nappes composites n'est pas dopé avec des particules de carbone, ou bien le deuxième sous-empilement (18) de nappes composites est dopé avec des particules de carbone à une concentration moyenne inférieure à celle du matériau matriciel de stratifié qui imprègne le premier sous-empilement de nappes composites.

10. Structure stratifiée selon une quelconque revendication précédente dans laquelle les particules de carbone sont des nanoparticules de carbone.

11. Aéronef (1) comprenant une structure stratifiée (10, 10a, 10b) selon une quelconque revendication précédente.

12. Aéronef (1) selon la revendication 11, comprenant une première structure stratifiée (10) selon une quelconque revendication précédente positionnée dans une première zone de l'aéronef ; et une deuxième structure stratifiée (10a, 10b) selon une quelconque revendication précédente positionnée dans une deuxième zone de l'aéronef ; dans lequel le matériau matriciel de stratifié de la première structure stratifiée est dopé avec des particules de carbone à une concentration moyenne supérieure à celle du matériau matriciel de stratifié de la deuxième structure stratifiée.

13. Procédé de fabrication d'une structure stratifiée (10, 10a, 10b), le procédé comprenant :
l'obtention d'un stratifié fibreux (13, 13a, 13b) imprégné d'un matériau matriciel de stratifié ; et
l'obtention d'un voile (15, 15a, 15b) de nanotubes de carbone imprégné d'un matériau matriciel de voile,
le matériau matriciel de stratifié et le matériau matriciel de voile étant dopés avec des particules de carbone, le procédé comprenant en outre :
le codurcissement du matériau matriciel de stratifié et du matériau matriciel de voile pour lier le voile de nanotubes de carbone au stratifié fibreux (13, 13a, 13b).

14. Procédé selon la revendication 13 dans lequel le stratifié fibreux (13, 13a, 13b) est obtenu par confection d'un empilement de nappes préimprégnées (14', 27'), chaque nappe préimprégnée comprenant une ou plusieurs couches fibreuses préimprégnées avec le matériau matriciel de stratifié.

15. Procédé selon la revendication 13 ou 14 dans lequel le stratifié fibreux est obtenu par confection d'un premier sous-empilement (16b) de nappes préimprégnées, chaque nappe préimprégnée du premier sous-empilement comprenant une ou plusieurs couches fibreuses préimprégnées avec le matériau matriciel de stratifié ; et confection d'un deuxième sous-empilement (17) de nappes préimprégnées, chaque nappe préimprégnée du deuxième sous-empilement comprenant une ou plusieurs couches fibreuses préimprégnées avec le matériau matriciel de stratifié, le matériau matriciel de stratifié imprégnant le deuxième sous-empilement n'étant pas dopé avec des particules de carbone.
